# EUROPEAN PATENT SPECIFICATION

(11) **EP 1 659 023 B1**
(45) Date of publication and mention of the grant of the patent: **21.11.2007**
(21) Application number: 04425870.5
(22) Date of filing: 23.11.2004
(51) Int. Cl.: B60P 1/02, B60P 3/04

(54) **Vehicle for transporting goods and animals, having at least one loading platform with adjustable height**
Fahrzeug zum Transport von Gütern und Vieh, mit mindestens einer höhenverstellbaren Ladeplattform
Véhicule pour le transport de marchandises et animaux, avec au moins une plate-forme réglable en hauteur

(43) Date of publication of application: 24.05.2006
(73) Proprietor: Carrozzeria Pezzaioli S.r.l., 25018 Montichiari (Brescia) (IT)
(72) Inventor: Pezzaioli, Giorgio, c/o Carrozzeria Pezzaioli S.r., 25018 Montichiari (Brescia) (IT)
(74) Representative: Crippa, Paolo Ernesto

(56) References cited:
- WO-A-02/057112
- DE-A1- 10 130 585
- IT-B- 1 172 018
- US-A- 6 058 885

## Description

The present invention relates to a transport vehicle according to the preamble of claim 1, generally usable for transporting goods and, in particular, usable for transporting animals, for example livestock, and goods arranged on loading platforms, in the industry called "pallets". A vehicle of this kind is disclosed in WO 02/057112 A.

In the field of vehicles for transporting animals, the use of a vehicle is known, comprising a loading vane inside which there is housed a loading platform with adjustable height according to the requirements of the transport to carry out.

Some solutions known in the field exhibit a rope system for positioning the platform at the desired height.

However, these solutions exhibit several disadvantages, especially due to the wear the ropes are subject to, and to their tendency to absorb or being infiltrated with the liquids they come in contact with, generally resulting from the excrements or urine of the animals carried.

Other solutions, on other hand, exhibit an oil-dynamic cylinder system for positioning the platform at the desired height.

For example, the Italian invention patent IT 1172018, by the same Applicant, describes a vehicle having a loading body housing a loading platform that can be lifted by oil-dynamic cylinders.

Even though this solution is highly valid, however it does not meet an increasingly felt need of the users of these vehicles, that is, using the vehicle loading body when animals are not transported, for the transport of goods arranged on pallets.

In particular, to optimise the available volumes, in these cases it is advisable to arrange the pallets sided to one another and therefore the useful width inside the body should be at least equal to twice the standard width of a pallet.

A solution is also known, realised by the same Applicant to meet such need, wherein a vehicle comprises a loading body wherein there is housed at least one platform with adjustable height through a system exhibiting handling units, wherein each unit comprises a pair of oil-dynamic cylinders sided to one another and in a series.

Even though this solution is particularly appreciated, it has shown some disadvantages especially as regards the wear of some members which, during the operations of lifting and lowering the platform, exhibit a tendency to rub against stiff surfaces.

The object of the present invention is to meet the above requirements while overcoming the disadvantages mentioned above with reference to the prior art.

Such object is achieved by a vehicle realised according to claim 1. The dependent claims described embodiment variants.

The features and advantages of the vehicle according to the present invention will appear clearly from the following description of an example of embodiment, made by way of a non-limiting example, according to the attached figures, wherein:

- figure 1 shows a vehicle according to the present invention, according to one variant of embodiment;

- figure 2 shows a handling unit for the handling means of the vehicle of figure 1;

- figure 3 shows the handling unit of figure 2 with visible support members;

- figure 4 shows an enlarged view of the support members of figure 3;

- figure 5 shows a plan view of the handling unit of figure 2; and

- figure 6 shows, among the others, a post of the vehicle of figure 1, associated to longitudinal sides of said vehicle.

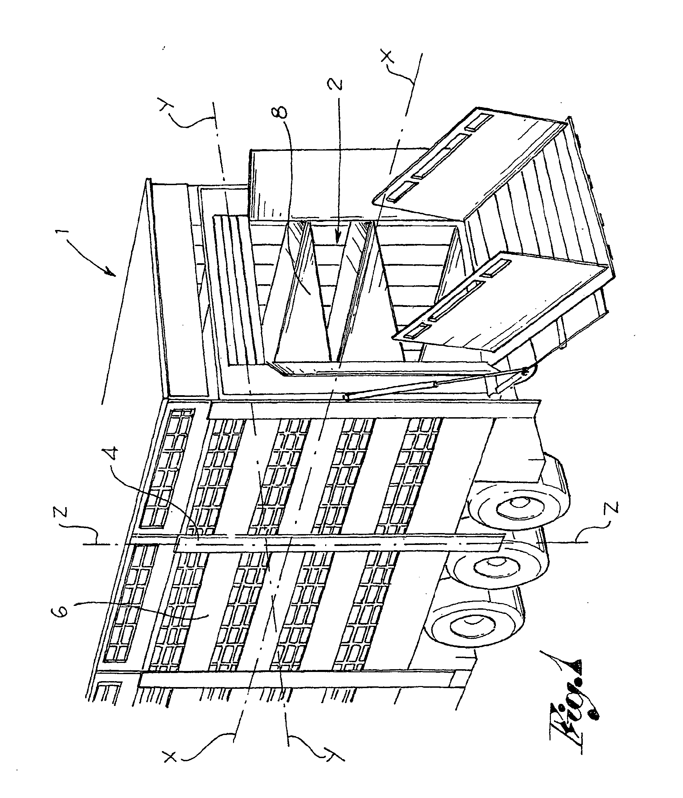

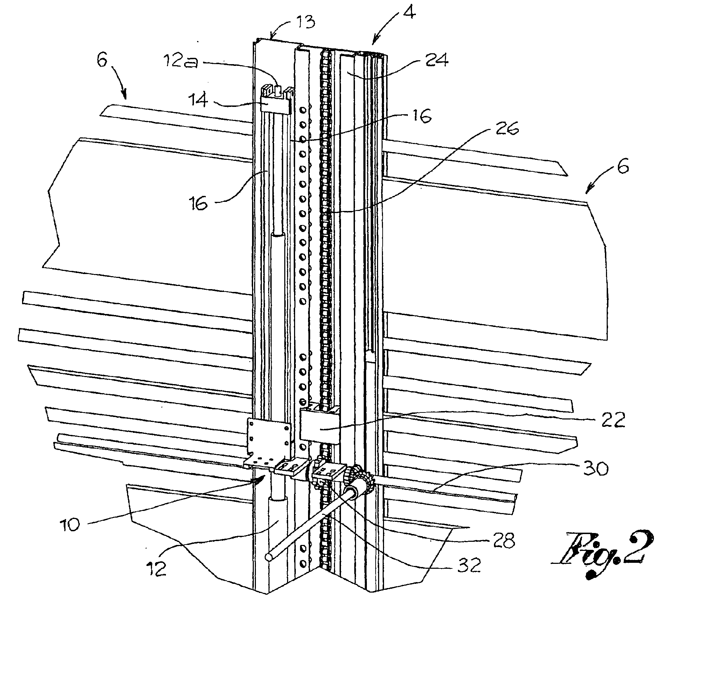

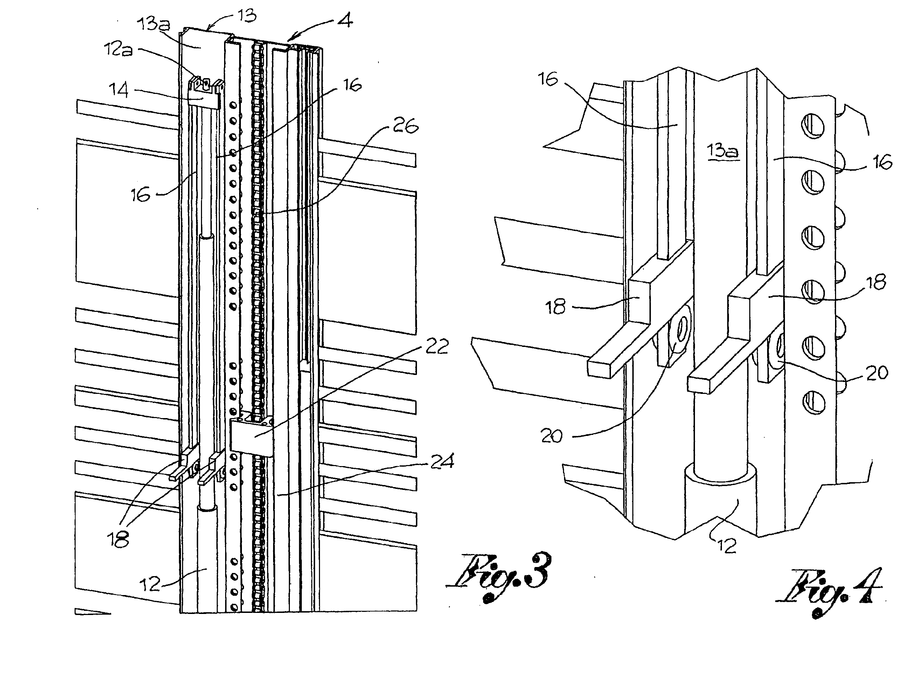

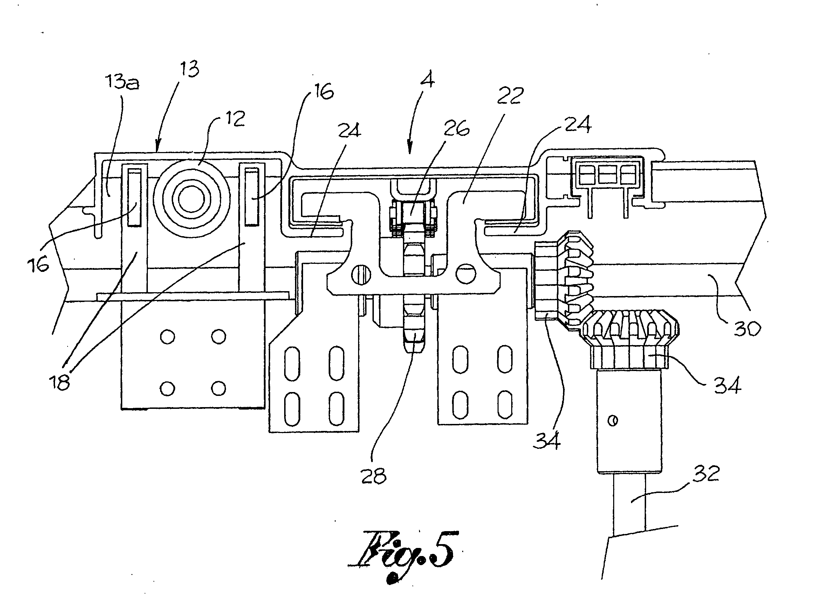

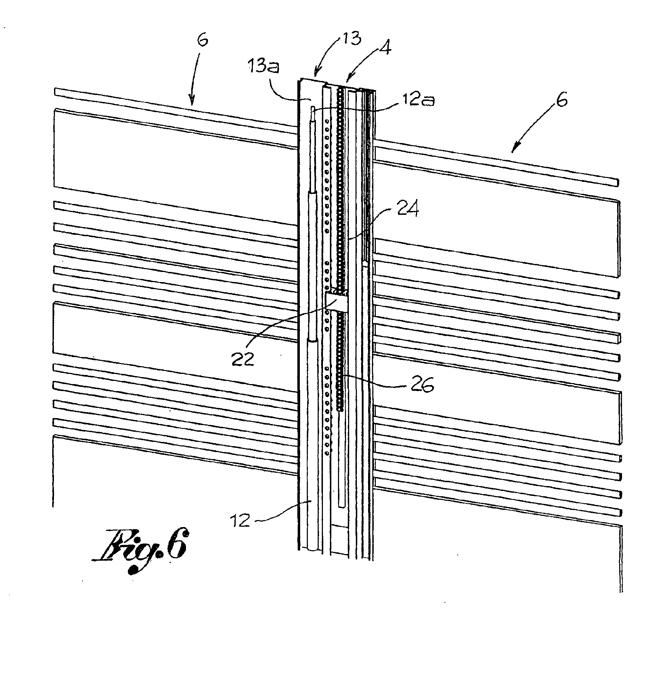

According to the attached figures, reference numeral 1 globally indicates a transport vehicle comprising a loading zone 2 intended for the loading of goods to be carried.

The loading zone extends along a longitudinal axis X-X and along a cross axis Y-Y.

According to a preferred embodiment, said loading zone exhibits at least one post 4 having mainly vertical extension, that is, along a vertical axis Z-Z.

In an embodiment variant, said loading zone is delimited by longitudinal sides 6 for separating the goods, preferably supported by said posts.

According to a preferred embodiment, said loading zone is delimited by a loading body, closed on top by a roof, preferably liftable.

Moreover, said vehicle comprises at least one platform 8 adapted for being housed into said loading zone and intended to support the goods to be carried.

Moreover, said vehicle comprises handling means, adapted for handling said platform 8 from a lower height to a higher height and vice versa.

In other words, said platforms 8 have adjustable height, according to the specific needs, based on the dimensions, type and amount of goods to be transported.

Moreover, vehicle 1 comprises locking means adapted for locking said platform at a fixed height.

The handling means comprise at least one handling unit 10, operating in a platform support zone. Preferably, said handling means comprise four handling units 10, operating in four different platform support zones, said zones being generally arranged close to the vertices of a rectangle.

Preferably, said handling unit 10 comprises at least one oil-dynamic cylinder 12, preferably telescopic. According to a preferred embodiment, said handling unit comprises a single oil-dynamic cylinder 12, preferably telescopic.

Cylinder 12 is fully transversally housed into a compartment 13a of a beam 13 having mainly vertical extension.

Preferably, said beam 13 is a portion of said post 4 and said compartment 13a is open towards the loading zone.

Cylinder 12 is arranged on the platform of the loading zone, at a first end, called fixed end.

The other end of the cylinder, called mobile end 12a, is operatively connected to platform 8.

In particular, said mobile end is connected to a connecting member 14 to which a lifting bar 16 is connected, secured at its first end to said connecting member 14.

Said bar 16 develops downwards relative to said mobile end 12a of cylinder 12 and the other end is connected to said platform 8, so that said platform 8, handled by said handling means, is at a lower height than the height at which said mobile 12a of cylinder 12 is.

Preferably, said handling means comprise a support member 18 adapted for supporting said platform. Advantageously, said support member 18 slides relative to said lifting bar 16 when the platform is locked.

According to a preferred embodiment, said support member 18 exhibits a slot through which said lifting bar 16 slides.

Said support member 18 is constrained in a single direction of movement to the lifting bar 16.

In other words, the support member 18 rests on a lock 20 arranged at the end of the lifting bar 16.

In this way, when the mobile end 12a of cylinder 12 lifts, the support member 18 is forced to move upwards, as it is constrained to the lifting bar 16 by lock 20.

On the other hand, when the platform is locked at a desired height and the mobile end 12a of cylinder 12 lowers, the support member 18 remains fixed to the platform and therefore at a lower height, whereas the lifting bar 16 slides relative to it, to move the mobile end 12a of cylinder 12 at a lower height than that corresponding to the desired position of the platform.

In other words, said handling means can be released from said platform 8 locked at said fixed height.

Moreover, according to a preferred embodiment, said vehicle comprises guiding means adapted for guiding said platform to place it at a desired height.

Said guiding means comprise a plate 22 adapted for being connected to said platform 8 and for sliding into a guide track 24, to which said plate is coupled through a shaped coupling, such as a "T" or a "dovetail" shape.

Preferably, said guide track 24 is a portion of said post 4 facing the loading zone.

In other words, said post 4, advantageously, is realised as a single extruded, preferably of aluminium, and shaped so as to realise said track 24 and said post 13.

Moreover, said vehicle comprises synchronisation means operatively connected to said handling means to synchronise the handling unit 10 with a further handling unit of the handling means.

According to a preferred embodiment, the synchronisation means comprise a fixed chain 26, a toothed wheel 28, adapted for rolling on said chain 26, at least one main driven shaft 30 integrally connected in rotation with said toothed wheel and at least one secondary driven shaft 32, connected to said main driven shaft through further toothed wheels 34, preferably conical.

Said main driven shaft extends along the longitudinal axis X-X and said secondary driven shaft extends along the cross axis Y-Y and is further connected to a main driven shaft of a further handling unit of said handling means.

Said fixed chain 26 is housed on the bottom of said track 24.

In the normal use of vehicle 1, it is necessary to arrange platform 8 at a desired height.

Said platform is housed in the loading zone and supported by the support members 18 of each handling unit.

By way of an example, let us suppose that in a first configuration, said starting configuration, platform 8 is arranged at a first height and that it is necessary to move it at a second height, in a second configuration, said final configuration, said second height being higher that the first height.

In the starting configuration, the mobile end 12a of cylinder 12 is arranged at a first height.

The operator starts the handling means. The mobile end 12a of cylinder 12 lifts, moving at a second height, higher than the first height, the height of the lock 20 at the lifting bar 16 corresponding to the second desired height for the platform.

The platform is therefore arranged in the second configuration, at the desired height.

The operator starts the locking means, that is, he locks the platform at the desired height, for example by a latch.

The free end of cylinder 12, in the second configuration of the platform, may protrude above the allowed height limit for the vehicle, or above the loading body, and therefore it is necessary to return it within the permitted limits.

The operator restarts the handling means, retracting the free end 12a of cylinder 12 until it returns to an acceptable position.

During the descent, the handling means are released from the platform locked at the desired height, as the lifting bar 16 slides relative to the support member 16.

Advantageously, moreover, cylinder 12 exhibits such small size that the useful cross width of the loading zone is adapted for housing at least one loading unit. In particular, the useful cross width of the loading zone is adapted for housing two loading units, in the industry called "pallets".

In other words, the useful cross width of the loading zone is equal to 2420mm (whereas two sided pallets have an overall width of 2400mm), and the overall outer width of the vehicle is within the limits permitted by the regulations in force, that is 2550mm.

Innovatively, the vehicle according to the present invention is adapted for positioning a platform at a desired height inside the loading zone, and at the same time, for housing two sided pallets in the loading zone for loading goods.

Innovatively, therefore, said vehicle is adapted for transporting animals and for transporting goods arranged on pallets.

According to an advantageous aspect of the invention, the cylinder exhibits a considerable stroke, for suitably positioning the platform and, at the same time, it can be released from it for returning the mobile end within the height limits allowed for a vehicle.

According to a further advantageous aspect, the handling means are reliable over time and resistant to the action of corrosive agents such as excrements, urine and the like.

According to an even further advantageous aspect, the vehicle exhibits a high tendency to lift and lower the platform without harmful inclinations of the same.

Advantageously, moreover, the sides are supported by a post that, at the same time, acts as a guide track for the platform, housing for the piston and locking means for the platform.

Finally, according to a further advantageous aspect, the overall outer width of the vehicle is within the limits imposed by the regulations in force and, at the same time, two sided pallets can be housed in the loading zone.

It is clear that a man skilled in the art, in order to meet specific and incidental needs, can make several changes and variants to the vehicle described above, all falling within the scope of protection as defined in the following claims.

## Claims

1. Vehicle (1) for transporting goods and animals, comprising
- a loading zone (2) adapted for loading the goods to be carried, wherein the loading zone extends along a longitudinal axis (X-X) of the vehicle and along a cross axis (Y-Y) being parallel to the wheel axis of the vehicle;
- at least one platform (8) for supporting said goods to be carried;
- handling means (10,12,16,18), adapted for handling said platform from a lower height to a higher height and vice versa;
- locking means adapted for locking said platform at a fixed height;
wherein said handling means comprise at least one handling unit (10), cooperating with said platform in a support zone of said platform,
and wherein said handling unit comprises at least one oil-dynamic cylinder (12),
and wherein said handling means comprise at least one lifting bar (16) secured at one first end to the mobile end (12a) of the cylinder (12), protruding downwards relative to said mobile end and adapted for cooperating at the other end with said platform, so that said platform, handled by said handling means, is at a smaller height than the height of said mobile end of the cylinder,
said vehicle being **characterised in that** said handling means can be released from said platform locked at said fixed height.

2. Vehicle according to claim 1, wherein said handling unit comprises a single oil-dynamic cylinder (12).

3. Vehicle according to claim 2, wherein said cylinder is telescopic.

4. Vehicle according to any one of the preceding claims, wherein said handling means comprise at least one support member (18) adapted for being secured to said platform and sliding relative to said lifting bar when the platform is locked.

5. Vehicle according to any one of the previous claims, further comprising guiding means (22, 24) adapted for guiding said platform to place it at a desired height.

6. Vehicle according to claim 5, wherein said guiding means comprise a plate (22) adapted for being connected to said platform and for sliding in a guide track (24).

7. Vehicle according to any one of the preceding claims, wherein said cylinder (12) is fully housed along the cross axis (Y-Y) into a compartment (13a) of a beam (13) having mainly vertical extension.

8. Vehicle according to any one of the previous claims, further comprising synchronisation means wherein said synchronisation means comprise
- a fixed chain (26);
- a toothed wheel (28), adapted for rolling on said chain;
- at least one main driven shaft (30) integrally connected in rotation with said toothed wheel;
- at least a secondary driven shaft (32), connected to said main driven shaft through toothed wheels,
wherein said main driven shaft extends along the longitudinal axis (X-X) and said secondary driven shaft extends along the cross axis (Y-Y) and is further connected to a main driven shaft of a further handling unit of said handling means.

9. Vehicle according to claim 8 , wherein said chain (26) is housed on the bottom of a guide track (24) for said platform.

10. Vehicle according to any one of the previous claims, wherein said loading zone peripherally exhibits at least one post (4) having mainly vertical extension.

11. Vehicle according to claim 10, wherein, on the side facing the loading zone, said post exhibits a guide track (24) for said platform and a housing compartment (13a) for the cylinder of said handling means.

12. Vehicle according to claim 10 or 11, wherein said vehicle further comprises cross sides (6) for containing the goods, said posts being adapted for supporting said sides.

13. Vehicle according to any one of the preceding claims, wherein two lifting bars are provided, said cylinder (12) being positioned between said bars (16), and wherein each one of said bars (16) is spaced from the cylinder (12) along said longitudinal axis (X-X).

## Patentansprüche

1. Fahrzeug zum Transport von Gütern und Vieh, umfassend
- einen Laderaum (2) zum Laden der zu befördernden Güter, wobei der Laderaum sich entlang einer Längsachse (X-X) des Fahrzeugs und entlang einer Querachse (Y-Y) erstreckt, die parallel zu der Radachse des Fahrzeugs ist;
- zumindest eine Ladefläche (8) zur Auflage der zu befördernden Güter;
- Betätigungsmittel (10, 12, 16, 18) zum Bewegen der genannten Ladefläche von einer geringeren Höhe zu einer größeren Höhe und umgekehrt;
- Verriegelungsmittel zum Arretieren der genannten Ladefläche bei einer festgelegten Höhe;
wobei die genannten Betätigungsmittel zumindest eine Betätigungseinheit (10) umfassen, die mit der genannten Ladefläche in einem Tragbereich der genannten Ladefläche zusammenwirkt,
und wobei die genannte Betätigungseinheit zumindest einen ölhydraulischen Zylinder (12) umfasst;
und wobei die genannten Handhabungsmittel zumindest eine Hubstange (16) umfassen, die an einem ersten Ende an dem beweglichen Ende (12a) des Zylinders (12) befestigt ist, nach unten gegenüber dem genannten beweglichen Ende hervorragt und so ausgebildet ist, dass sie am anderen Ende mit der genannten Ladefläche zusammenwirkt, so dass die genannte Ladefläche, die von den genannten Betätigungsmitteln bewegt wird, sich auf einer geringeren Höhe befindet als die Höhe des genannten beweglichen Endes des Zylinders,
wobei das Fahrzeug **dadurch gekennzeichnet ist, dass** die genannten Betätigungsmittel von der in der genannten festgelegten Höhe arretierten Ladefläche gelöst werden können.

2. Fahrzeug nach Anspruch 1, wobei die genannte Betätigungseinheit einen einzelnen ölhydraulischen Zylinder (12) umfasst.

3. Fahrzeug nach Anspruch 2, wobei der genannte Zylinder teleskopisch ist.

4. Fahrzeug nach einem der vorhergehenden Ansprüche, wobei die genannten Betätigungsmittel zumindest ein Tragelement (18) zur Befestigung an der genannten Ladefläche und zum Gleiten gegenüber der genannten Hubstange umfassen, wenn die Ladefläche arretiert ist.

5. Fahrzeug nach einem der vorhergehenden Ansprüche ferner umfassend Führungsmittel (22, 24) zum Führen der genannten Ladefläche, um sie auf eine gewünschte Höhe einzustellen.

6. Fahrzeug nach Anspruch 5, wobei die genannten Führungsmittel eine Platte (22) zum Verbinden mit der genannten Ladefläche und zum Gleiten in einer Führungsbahn (24) umfassen.

7. Fahrzeug nach einem der vorhergehenden Ansprüche, wobei der genannte Zylinder (12) vollständig entlang der Querachse (Y-Y) in einem Fach (13a) eines Trägers (13) aufgenommen ist, der sich im wesentlichen vertikal erstreckt.

8. Fahrzeug nach einem der vorhergehenden Ansprüche, ferner umfassend Synchronisierungsmittel, wobei die genannten Synchronisierungsmittel folgendes umfassen:
- eine feststehende Kette (26),
- ein Zahnrad (28) zum Abrollen auf der genannten Kette;
- zumindest eine Hauptabtriebswelle (30), die einstückig mit dem genannten Zahnrad drehfest verbunden ist,
zumindest eine sekundäre Abtriebswelle (32), die mit der genannten Hauptabtriebswelle über Zahnräder verbunden ist,
wobei die genannte Hauptabtriebswelle sich entlang der Längsachse (X-X) und die genannte sekundäre Abtriebswelle sich entlang der Querachse (Y-Y) erstreckt und darüber hinaus mit einer Hauptabtriebswelle einer weiteren Betätigungseinheit der genannten Betätigungsmittel verbunden ist.

9. Fahrzeug nach Anspruch 8, wobei die genannte Kette (26) auf dem Boden einer Führungsbahn (24) für die genannte Ladefläche aufgenommen ist.

10. Fahrzeug nach einem der vorhergehenden Ansprüche, wobei der genannte Laderaum an seinem Umfang zumindest einen Stütze (4) aufweist, die sich im wesentlichen vertikal erstreckt.

11. Fahrzeug nach Anspruch 10, wobei die genannte Stütze auf der Seite, die dem Laderaum zugewandt ist, eine Führungsbahn (24) für die genannte Ladefläche aufweist sowie ein Aufnahmefach (13a) für den Zylinder der genannten Betätigungsmittel.

12. Fahrzeug nach Anspruch 10 oder 11, wobei das genannte Fahrzeug ferner Querseiten (6) zum Halten der Güter umfasst, wobei die genannten Stützen zum Abstützen der genannten Seiten ausgebildet sind.

13. Fahrzeug nach einem der vorhergehenden Ansprüche wobei zwei Hubstangen vorgesehen sind, der genannte Zylinder (12) zwischen den genannten Stangen (16) angeordnet ist und wobei jede der genannten Stangen (16) von dem Zylinder (12) entlang der Längsachse (X-X) beabstandet ist.

## Revendications

1. Véhicule (1) pour le transport de marchandises et d'animaux, comprenant :
- une zone de chargement (2) adaptée au chargement des marchandises devant être transportées, dans lequel la zone de chargement s'étend le long d'un axe longitudinal (X-X) du véhicule et le long d'un axe transversal (Y-Y) parallèle à l'axe de la roue du véhicule ;
- au moins une plate-forme (8) pour supporter lesdites marchandises devant être transportées ;
- des moyens de manutention (10, 12, 16, 18) adaptés pour manipuler ladite plate-forme d'une hauteur inférieure à une hauteur supérieure et vice-versa ;
- des moyens de verrouillage adaptés pour verrouiller ladite plate-forme à une hauteur déterminée ;
dans lequel lesdits moyens de manutention comprennent au moins une unité de manutention (10), coopérant avec ladite plate-forme dans une zone de support de ladite plate-forme,
et dans lequel ladite unité de manutention comprend au moins un cylindre oléodynamique (12),
et dans lequel lesdits moyens de manutention comprennent au moins un levier d'élévation (16) fixé au niveau d'une première extrémité à l'extrémité mobile (12a) du cylindre (12), faisant saillie vers le bas par rapport à ladite extrémité mobile et adapté de manière à coopérer au niveau de l'autre extrémité avec ladite plate-forme, de sorte que ladite plate-forme, manipulée par lesdits moyens de manutention, se situe à une hauteur inférieure à la hauteur de ladite extrémité mobile du cylindre,
ledit véhicule étant **caractérisé en ce que** lesdits moyens de manutention peuvent être relâchés de ladite plate-forme verrouillée à ladite hauteur déterminée.

2. Véhicule selon la revendication 1, dans lequel ladite unité de manutention comprend un seul cylindre oléodynamique (12).

3. Véhicule selon la revendication 2, dans lequel ledit cylindre est télescopique.

4. Véhicule selon l'une quelconque des revendications précédentes, dans lequel lesdits moyens de manutention comprennent au moins un élément de support (18) adapté de manière à être fixé à ladite plate-forme et coulissant par rapport au dit levier d'élévation, lorsque la plate-forme est verrouillée.

5. Véhicule selon l'une quelconque des revendications précédentes, comprenant en outre des moyens de guidage (22, 24) adaptés de manière à guider ladite plate-forme afin de placer celle-ci à une hauteur souhaitée.

6. Véhicule selon la revendication 5, dans lequel lesdits moyens de guidage comprennent une plaque (22) adaptée de manière à être reliée à ladite plate-forme et à coulisser dans une rampe de guidage (24).

7. Véhicule selon l'une quelconque des revendications précédentes, dans lequel ledit cylindre (12) est complètement logé le long de l'axe transversal (Y-Y) dans un compartiment (13a) d'une poutre (13) ayant principalement une extension verticale.

8. Véhicule selon l'une quelconque des revendications précédentes, comprenant en outre des moyens de synchronisation, dans lequel lesdits moyens de synchronisation comprennent :
- une chaîne fixe (26) ;
- une roue dentée (28), adaptée de manière à rouler sur ladite chaîne ;
- au moins un arbre entraîné principal (30) relié intégralement en rotation à ladite roue dentée ;
- au moins un arbre entraîné secondaire (32), relié au dit arbre entraîné principal par l'intermédiaire des roues dentées,
dans lequel ledit arbre entraîné principal s'étend le long de l'axe longitudinal (X-X) et ledit arbre entraîné secondaire s'étend le long de l'axe transversal (Y-Y) et est en outre relié à un arbre entraîné principal d'une autre unité de manutention desdits moyens de manutention.

9. Véhicule selon la revendication 8, dans lequel ladite chaîne (26) est logée sur le fond d'une rampe de guidage (24) pour ladite plate-forme.

10. Véhicule selon l'une quelconque des revendications précédentes, dans lequel ladite zone de chargement présente au niveau de sa périphérie au moins un montant (4) ayant principalement une extension verticale.

11. Véhicule selon la revendication 10, dans lequel, sur le côté faisant face à la zone de chargement, ledit montant présente une rampe de guidage (24) pour ladite plate-forme et un compartiment de logement (13a) pour le cylindre desdits moyens de manutention.

12. Véhicule selon la revendication 10 ou 11, dans lequel ledit véhicule comprend en outre des côtés transversaux (6) pour contenir les marchandises, lesdits montants étant adaptés de manière à supporter lesdits côtés.

13. Véhicule selon l'une quelconque des revendications précédentes, dans lequel deux leviers d'élévation sont prévus, ledit cylindre (12) étant positionné entre lesdits leviers (16), et dans lequel chacun desdits leviers (16) est espacé du cylindre (12) le long dudit axe longitudinal (X-X).
